## Europäisches Patentamt

(19) **European Patent Office**

**Office européen des brevets**

(11) Veröffentlichungsnummer: **0 134 879**

**A2**

(12) # EUROPÄISCHE PATENTANMELDUNG

(21) Anmeldenummer: **84100813.9**

(22) Anmeldetag: **26.01.84**

(51) Int. Cl.⁴: **B 01 D 33/00**

(30) Priorität: **29.06.83 DE 3323368**

(43) Veröffentlichungstag der Anmeldung:
**27.03.85 Patentblatt 85/13**

(84) Benannte Vertragsstaaten:
**AT BE CH DE FR GB IT LI LU NL SE**

(71) Anmelder: **Uhde GmbH**
**Friedrich-Uhde-Strasse 15 Postfach 262**
**D-4600 Dortmund 1(DE)**

(72) Erfinder: **Körner, Jörg-Peter, Dipl.-Ing.**
**Baurothstrasse 7**
**D-5800 Hagen 1(DE)**

(72) Erfinder: **Kluger, Hans D., Dr. Dipl.-Ing.**
**Finkenweg 29**
**D-5758 Fröndenberg-Ardey(DE)**

(72) Erfinder: **Koll, Gregor, Dipl.-Ing.**
**Auf dem Birnbaum 25**
**D-5800 Hagen 1(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Einrichtung an einem Wellendurchgang eines unter Druck stehenden Gehäuses.

(57) Bei einer Einrichtung an einem Wellendurchgang eines unter Druck stehenden Gehäuses mit Durchführung eines im Gehäuse befindlichen Mediums, beispielsweise Lagereinrichtung der Welle eines Druckrotationsfilters, mit einem drehbar gelagerten Wellenzapfen und Dichtungen zwischen den sich drehenden Elementen einerseits und den stehenden Elementen andererseits soll eine Lösung geschaffen werden, mit der eine optimale Lagerung einer derartigen Welle ebenso gewährleistet wird wie eine konstruktiv einfache Lösung und eine gute Möglichkeit, diesen Bereich zu dichten. Dies wird dadurch erreicht, daß der Wellenzapfen mit einem Topf (5) mit Topfboden (6) und zylindrischer Topfwand (7) ausgerüstet ist, wobei die Topfwand (7) zentrisch zum Wellenzapfen (4) nach außen weisend angeordnet ist, und daß der Gehäuseboden (8) mit einem in den Spalt zwischen Zylinder (7) und Wellenzapfen (4) hineinragenden Zylinderelement (9) ausgerüstet ist, wobei die Lagerung (10, 11) zwischen Zylinderelement (9) am Gehäuseboden einerseits und Wellenzapfen (4) und/oder Topf (5) andererseits erfolgt.

FIG. 1

"Einrichtung an einem Wellendurchgang eines
unter Druck stehenden Gehäuses"

Die Erfindung richtet sich auf eine Einrichtung an einem Wellendurchgang eines unter Druck stehenden Gehäuses mit Durchführung eines im Gehäuse befindlichen Mediums, beispielsweise Lagereinrichtung der Welle eines Druckrotationsfilters, mit einem drehbar gelagerten Wellenzapfen und Dichtungen zwischen den sich drehenden Elementen einerseits und den stehenden Elementen andererseits.

Zum Beispiel bei Druckrotationsfiltern, die mit einer Vielzahl von um eine zentrale Welle angeordneten Filterscheiben innerhalb eines Druckgefäßes ausgerüstet sind, muß dafür Sorge getragen werden, daß das Filtrat durch die zentrische Hohlwelle nach außen geführt wird, so daß die Wellenlagerung dieser Forderung gerecht werden muß. Andererseits werden derartige Filterpakete auch gelegentlich ausgewechselt oder zur Revision aus dem Druckgefäß ausgehoben, so daß eine zweite Forderung an eine derartige Lagerstelle darin besteht, daß das Auswechseln der zentrischen Welle vergleichsweise einfach möglich ist.

Aus der DE-PS 25 52 515 der Anmelderin ist ein Druckrotationsfilter mit horizontalen Filterplatten bekannt, wobei dessen Einrichtung am Wellendurchgang aus einer Lagerstelle besteht, die einen kurzen Hohlwellenteil aufweist,

welcher mit entsprechenden Drucklagern in ein Gehäuse abgestützt ist. Die Welle des Filterpaketes wird von oben steckerartig und drehmomentschlüssig in dieses kurze Wellenteil eingesteckt.

Insbesondere die Abdichtung kann bei derartigen Einrichtungen noch zu Problemen führen.

Aufgabe der Erfindung ist daher die Schaffung einer Lösung, mit der eine optimale Lagerung einer derartigen Welle ebenso gewährleistet wird wie eine konstruktiv einfache Lösung und eine gute Möglichkeit, diesen Bereich zu dichten.

Bei einer Einrichtung der gattungsgemäßen Art wird diese Aufgabe gemäß der Erfindung dadurch gelöst, daß der Wellenzapfen mit einem Topf mit Topfboden und zylindrischer Topfwand ausgerüstet ist, wobei die Topfwand zentrisch zum Wellenzapfen nach außen weisend angeordnet ist, und daß der Gehäuseboden mit einem in den Spalt zwischen Zylinder und Welle hineinragenden Zylinderelement ausgerüstet ist, wobei die Lagerung zwischen Zylinderelement am Gehäuseboden einerseits und Wellenzapfen und/oder Topf andererseits erfolgt.

Mit der Erfindung wird erreicht, daß sowohl für die Lagerung als auch für die Abdichtung gegenüber der

- 3 -

0134879

bekannten Lösung eine Mehrzahl von Flächen zur Verfügung steht, wodurch auch eine größere Krafteinleitung in die Welle ermöglicht wird, da diese nicht geschwächt ist. Gleichzeitig können an sich bekannte, druckluftbeaufschlagte Dichtmembranen zwischen Wänden des Topfes einerseits und Wänden des Gehäusebodens andererseits eingesetzt werden.

Durch die erfindungsgemäße Gestaltung kann auch erreicht werden, daß das Filtrat nicht mehr durch den das Drehmoment übertragenden Wellenzapfen abgeleitet zu werden braucht, sondern durch die Topfgestaltung hier andere Möglichkeiten erreichbar sind.

Nach einer Ausgestaltung sieht die Erfindung vor, daß die Topfwand mit einer im wesentlichen in der Gehäusebodenebene parallel zum Gehäuseboden verlaufenden Scheibe ausgerüstet ist, wobei die Dichtung zwischen Gehäuseboden und Scheibe erfolgt.

Diese Gestaltung ist insbesondere, was die Dichtungen angeht, besonders preisgünstig, da sie konstruktiv sehr einfach ist.

Hierbei kann nach der Erfindung vorgesehen sein, daß die Hohlwelle über den Topf unter Freilassung von Durchtrittskanälen für das Filtrat gestülpt und dichtend oben auf die

- 4 -

0134879

Scheibe aufgesetzt ist.

Zum Durchtritt des Filtrates weist in diesem Falle die Scheibe Durchtrittsbohrungen auf, wobei den Bohrungen im Gehäuseboden ein Sammelringraum zugeordnet ist, der mit einer Filtratabführleitung verbunden ist, wie dies die Erfindung ebenfalls vorsieht.

Eine andere weitere Ausgestaltung der Erfindung besteht darin, daß der Gehäuseboden parallel zum ersten, im wesentlichen der Lagerung dienenden Zylinder mit einem zweiten, die Topfwand außen bereichsweise umgreifenden weiteren Zylinder ausgerüstet ist, wobei die Dichtung an Zylinderflächen des Gehäusebodens einerseits und an dem Topf andererseits erfolgt.

Durch diese Gestaltung stehen weitere Dichtungs- und/oder Lagerflächen zur Verfügung, da konzentrische Ringflächen vorgesehen sind, die miteinander korrespondieren.

Zur Durchführung des Filtrates ist dabei vorgesehen, daß die Hohlwelle mit Bohrungen den Raum zwischen benachbarten Zylinderflächen beaufschlagt und dieser Raum über Bohrungen mit der Filtratabführleitung in Verbindung steht.

Weitere Vorteile, Einzelheiten und Merkmale der Erfindung ergeben sich aufgrund der nachfolgenden Beschreibung von Ausführungsbeispielen der Erfindung sowie anhand der Zeichnung. Diese zeigt in

Fig. 1 im Schnitt ein Ausführungsbeispiel einer Einrichtung nach der Erfindung sowie in

Fig. 2 ebenfalls im Schnitt ein weiteres Ausführungsbeispiel.

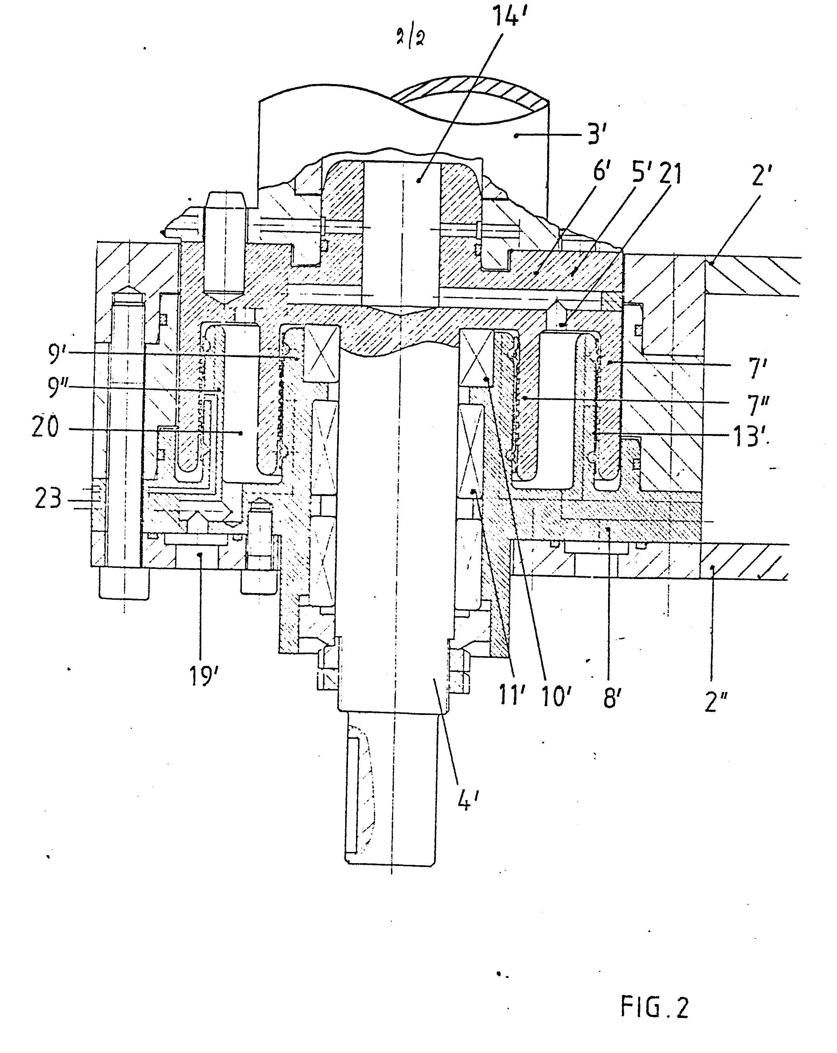

Die allgemein mit 1 bezeichnete Einrichtung an einem Wellendurchgang ist an einem Gehäuse, z. B. dem Gehäuse eines Druckrotationsfilters, vorgesehen. Von dem Gehäuse 2 ist lediglich ein Wandelement angedeutet, wobei in Fig. 2 zwei unterschiedliche Einbauwagen am Gehäuse 2´ bzw. 2" angedeutet sind. Die in das Innere des Gehäuses 2 führende Welle 3 ist in den dargestellten Beispielen als Hohlwelle 3 bzw. 3´ ausgebildet. Durch diese Hohlwelle soll z. B. im Falle eines Druckrotationsfilters das Filtrat von nicht näher dargestellten Filterplatten nach außen geleitet werden. Wie dies geschieht, wird weiter unten näher beschrieben.

Zum Antrieb der Welle 3 im Inneren des Behälters 2 ist ein den Behälter 2 durchsetzender Wellenzapfen 4 vorgesehen, der durch Rückkröpfung mit einem Topf 5 ausgerüstet ist. Dieser Topf 5 weist einen Topfboden 6 und eine zylindrische Topfwand 7 auf.

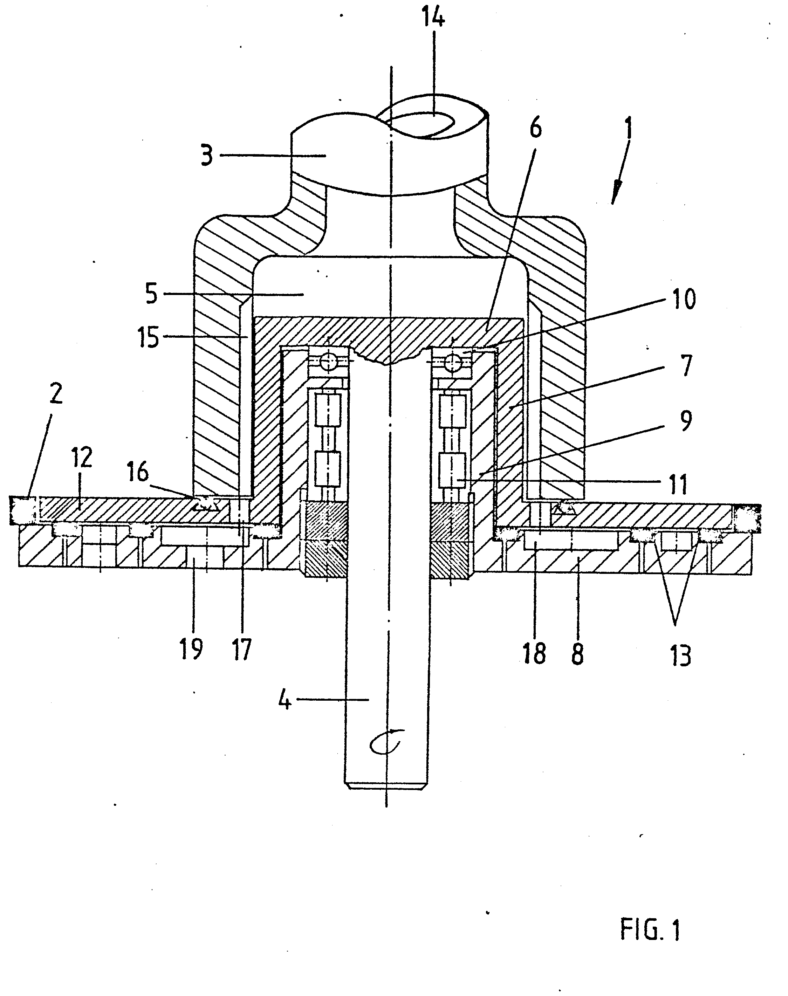

Im Ausführungsbeispiel nach Fig. 1 ist am Gehäuse 2 eine Tellerscheibe als Gehäuseboden 8 angeschraubt, die mit einer zylindrischen Wand 9 in den Ringraum zwischen den Wellenzapfen 4 und der zylindrischen Topfwand 7 eingreift. Zwischen der zylindrischen Wand bzw. ihrer Innenfläche und dem Wellenzapfen 4 ist dabei noch ein solcher Abstand vorhanden, daß dort sowohl Radiallager als auch Axiallager 10 bzw. 11 Platz finden, was in der Figur nur symbolisch angedeutet ist.

Der Topf 5 beim Ausführungsbeispiel nach Fig. 1 weist nicht nur den Topfboden 6 und die zylindrische Topfwand 7 auf, sondern damit drehfest verbunden, z. B. damit einstückig ausgeführt, eine in der Ebene des Topfbodens verlaufende Scheibe 12. Zwischen der Unterseite der Scheibe 12 einerseits und der Oberseite des Tellers 8 andererseits sind z. B. pneumatisch beaufschlagte Dichtungen 13 vorgesehen.

Um das Filtrat aus der Innenbohrung 14 der Welle 3 nach außerhalb des Gehäuses fördern zu können, übergreift diese Hohlwelle 3 unter Freilassung von Durchtrittskanälen 15 für das Filtrat den Topf 5. Dabei sind zusätzliche Dichtungen 16 an der Stirnseite der Hohlwelle 3 vorgesehen bzw. in der Oberfläche der Scheibe 12. Die Scheibe 12 ist mit Durchtrittsbohrungen 17 ausgerüstet, die mit einem Sammelringraum 18 im Gehäuseboden bzw. in der Scheibe 8 korrespondieren. Aus diesem Sammelringraum 18 führt eine weitere Bohrung 19 zu einer nicht näher dargestellten Filtrat-Abführleitung.

In Fig. 2 ist ein abgewandeltes Ausführungsbeispiel der Erfindung dargestellt, wobei die grundsätzlich der Funktion nach gleichen Bauteile die Bezugszeichen der Figur 1 tragen, allerdings mit einem Strich versehen sind.

Der Wellenzapfen 4´ ist dabei ebenfalls mit einem Topf 5´ versehen. Sein Topfboden 6´ weist allerdings zwei konzentrisch zueinander angeordnete zylindrische Topfwände 7´ und 7" auf. Auch hier ist am Behälter 2´ bzw. 2" mittelbar oder unmittelbar eine Scheibe 8´ befestigt, die wiederum mit zwei zylindrischen Wänden 9´ und 9" ausgerüstet ist, die mit den entsprechenden zylindrischen Wänden 7´ und 7" korrespondieren.

Wie sich aus Fig. 2 ergibt, ist zwischen dem Wellenzapfen 4´ und der ortsfesten zylindrischen Wand 9´ ausreichend Raum für Lager 10´ bzw. 11´. Andererseits ist ein Ringraum 20 zwischen der zylindrischen Topfwand 7" und der zylindrischen Wand 9" als Sammelraum für das Filtrat vorgesehen. Von der Innenbohrung 14´ führen Zuführbohrungen 21 in diesen Ringraum 20 und von dort zu einer Ablaßbohrung 19´, die mit nicht näher dargestellten

- 8 -

0134879

Filtratleitungen verbunden sein kann.

Wie sich aus Fig. 2 ergibt, eignet sich diese Gestaltung besonders für das Vorsehen von pneumatischen Dichtungselementen 13", die über Druckluftzuführleitungen 23 beaufschlagbar sind.

Natürlich sind die beschriebenen Ausführungsbeispiele der Erfindung in vielfacher Weise abzuändern, ohne den Grundgedanken zu verlassen. So kann, wenn dies aus besonderen Gründen notwendig werden sollte, eine Mehrzahl von konzentrischen Topfwänden und zylindrischen Wänden am Gehäuse vorgesehen sein. Die Erfindung ist auch nicht auf die gewählte Art der Lagergestaltung beschränkt. Topf und Wellenzapfen können auch mehrteilig ausgebildet sein u. dgl. mehr.

0134879

Patentansprüche:

1. Einrichtung an einem Wellendurchgang eines unter Druck stehenden Gehäuses mit Durchführung eines im Gehäuse befindlichen Mediums, beispielsweise Lagereinrichtung der Welle eines Druckrotationsfilters, mit einem drehbar gelagerten Wellenzapfen und Dichtungen zwischen den sich drehenden Elementen einerseits und den stehenden Elementen andererseits,

dadurch gekennzeichnet,

daß der Wellenzapfen mit einem Topf (5) mit Topfboden (6) und zylindrischer Topfwand (7) ausgerüstet ist, wobei die Topfwand (7) zentrisch zum Wellenzapfen (4) nach außen weisend angeordnet ist, und daß der Gehäuseboden (8) mit einem in den Spalt zwischen Zylinder (7) und Wellenzapfen (4) hineinragenden Zylinderelement (9) ausgerüstet ist, wobei die Lagerung (10, 11) zwischen Zylinderelement (9) am Gehäuseboden einerseits und Wellenzapfen (4) und/oder Topf (5) andererseits erfolgt.

2. Einrichtung nach Anspruch 1,

dadurch gekennzeichnet,

daß die Topfwand (7) mit einer im wesentlichen in der Gehäusebodenebene parallel zum Gehäuseboden (8) verlaufenden Scheibe (12) ausgerüstet ist, wobei die Dichtung (13) zwischen Gehäuseboden (8) und Scheibe (12)

erfolgt.

3. Einrichtung nach Anspruch 1 oder 2,

   dadurch gekennzeichnet,

   daß die Hohlwelle (3) über den Topf (5) unter Freilassung von Durchtrittskanälen (15) für das Filtrat gestülpt und dichtend oben auf die Scheibe (12) aufgesetzt ist.

4. Einrichtung nach Anspruch 3,

   dadurch gekennzeichnet,

   daß die Scheibe Durchtrittsbohrungen (17) aufweist, wobei den Bohrungen (17) im Gehäuseboden (8) ein Sammelringraum (18) zugeordnet ist, der mit einer Filtratabführleitung verbunden ist.

5. Einrichtung nach Anspruch 1,

   dadurch gekennzeichnet,

   daß der Gehäuseboden parallel zum ersten, im wesentlichen der Lagerung dienenden Zylinder (9´) mit einem zweiten, die Topfwand (7") außen bereichsweise umgreifenden weiteren Zylinder (9") ausgerüstet ist, wobei die Dichtung (13´) an Zylinderflächen des Gehäusebodens (8´) einerseits und an dem Topf (5´) andererseits erfolgt.

0134879

6. Einrichtung nach Anspruch 5,

dadurch gekennzeichnet,

daß die Hohlwelle (3´) mit Bohrungen (21) den Raum (20) zwischen benachbarten Zylinderflächen (7", 9") beaufschlagt und dieser Raum (20) über Bohrungen (19´) mit der Filtratabführleitung in Verbindung steht.

0134879

FIG. 1

0134879

FIG.2